# EUROPÄISCHE PATENTANMELDUNG

(11) **EP 2 829 660 A2**
(43) Veröffentlichungstag der Anmeldung: **28.01.2015**
(21) Anmeldenummer: 14002516.4
(22) Anmeldetag: 21.07.2014
(51) Int. Cl.: E02B 3/20, H02G 3/08, H02G 9/10

(54) **Landanschlussschrank**

(30) Priorität: 22.07.2013 DE 102013012079
(71) Anmelder: Lange, Gerd, 46562 Voerde (DE)
(72) Erfinder: Lange, Gerd, 46562 Voerde (DE)
(74) Vertreter: Von Rohr Patentanwälte Partnerschaft mbB

(57) **Zusammenfassung**

Es wird eine Unterflureinrichtung zum stationären Einbau unterhalb eines Bodenniveaus, vorzugsweise an einer Kante eines Ufers oder Kais, zur Versorgung insbesondere von Schiffen mit elektrischer Energie und eine Vorrichtung mit einer solchen Unterflureinrichtung vorgeschlagen, wobei die Unterflureinrichtung eine in Einbaulage unter dem Bodenniveau liegende Oberseite aufweist, dem mindestens einen Konnektor aufweist und einen in Einbaulage unterhalb der Oberseite angeordneten Hohlraum der Unterflureinrichtung begrenzt, wobei die Unterflureinrichtung eine in Einbaulage unterhalb der Oberseite angeordnete Flutungseinrichtung aufweist, die dazu ausgebildet ist, ein Fluten des Hohlraums der Unterflureinrichtung zu ermöglichen, so dass ein Aufschwimmen der Unterflureinrichtung bei einem steigenden, auf die Unterflureinrichtung wirkenden Wasserspiegel verhindert wird.

## Beschreibung

Die vorliegende Erfindung betrifft Einrichtungen zur Versorgung, insbesondere von Schiffen, mit elektrischer Energie. Insbesondere betrifft die vorliegende Erfindung Landanschlussschränke bzw. Landanschlusskästen, die in Gewässernähe installiert werden, um Schiffe mit elektrischer Energie zu versorgen.

Aus Yachthäfen sind Systeme bekannt, bei denen feststehende Energieversorgungssäulen im Bereich der Kaimauer montiert sind.

Die WO 80/00583 betrifft eine Vorrichtung mit einem im Erdboden versenkten Kasten, innerhalb dessen und an dessen Grund eine Steckdose zur Verfügung gestellt wird. Ein Kabeleinlass zum Anschluss von Verbrauchern ist mittels Gummischürzen und Spritzschutzplatten abgedichtet, sodass Eindringen von Wasser in den Bereich der Steckdose verhindert wird. Weiter ist ein Ablaufrohr vorgesehen, um durch die Gummischürzen und Spritzschutzplatten abgewiesenes Wasser abführen zu können.

Die aus dem Stand der Technik bekannten Lösungen haben den Nachteil, dass im Fall eines Hochwassers fest montierte Versorgungssäulen bzw. Landanschlusskästen regelmäßig durch schwimmende Gegenstände beschädigt werden und unterirdische, gegen Wassereintritt geschützte Kästen aufgrund des gebildeten Hohlraums aufschwimmen können und daher ebenfalls ein Hochwasser nicht unbeschadet überstehen. Ferner werden bei Anschluss eines Verbrauchers unterhalb des Bodenniveaus die Anschlussarbeiten signifikant erschwert.

Aufgabe der vorliegenden Erfindung ist es, eine Einrichtung sowie eine Vorrichtung mit einer solchen Einrichtung zur Versorgung, insbesondere von Schiffen, mit elektrischer Energie sowie eine Verwendung und ein Verfahren anzugeben, die eine bessere Sicherung gegen Hochwasserschäden ermöglichen.

Die vorliegende Aufgabe wird durch eine Unterflureinrichtung gemäß Anspruch 1, durch eine Vorrichtung gemäß Anspruch 6, durch eine Verwendung gemäß Anspruch 9 oder durch ein Verfahren gemäß Anspruch 10 gelöst. Vorteilehafte Weiterbildungen sind Gegenstand der Unteransprüche.

Gemäß einem ersten Aspekt der vorliegenden Erfindung ist eine Unterflureinrichtung zum stationären Einbau unterhalb eines Bodenniveaus, vorzugsweise an einer Kante eines Ufers oder Kais, für eine Vorrichtung zur Versorgung insbesondere von Schiffen mit elektrischer Energie vorgesehen.

Die Unterflureinrichtung ist bevorzugt dazu ausgebildet, an der Uferkante eines Flusses in den Boden derart eingesetzt zu werden, dass die Unterflureinrichtung frontseitig mit der Uferkante oder Kaimauer fluchtet und/oder mit einer Oberseite unterhalb und in der Nähe des Bodenniveaus angeordnet werden kann.

Das Bodenniveau ist vorzugsweise eine Fläche, insbesondere Ebene, die durch eine die Unterflureinrichtung umgebende oder an die Unterflureinrichtung angrenzende Bodenoberfläche gebildet ist.

Auf eine Einbaulage, bei dem die Unterflureinrichtung vorzugsweise komplett unterhalb eines Bodenniveaus in den Boden eingesetzt bzw. in dem Boden verankert ist, beziehen sich die folgenden Beschreibungen, um die Lage einzelner Komponenten anschaulich darstellen zu können. Insbesondere bezieht sich die Einbaulage auf einem Einbau, bei dem eine Oberseite der Unterflureinrichtung in der Nähe, insbesondere unmittelbar angrenzend an das Bodenniveau angeordnet ist. Ferner ist besonders bevorzugt, dass die Unterflureinrichtung unmittelbar an einer Kaimauer, Uferwand o. dgl. in den Boden eingesetzt ist. Die Einbaulage bezieht sich im Folgenden daher insbesondere auch auf einen Einbauzustand, bei dem eine Seitenwand der Unterflureinrichtung zumindest im Wesentlichen flächenbündig mit einer Kaimauer oder Uferwand abschließt, hiermit fluchtet oder auf sonstige Weise mit einer Seitenwand freiliegt, bzw. nicht mit Erde bedeckt ist.

Es versteht sich, dass durch Bezugnahme auf die Einbaulage vorzugsweise lediglich die Position bzw. Anordnung unterschiedlicher Elemente zueinander näher charakterisiert wird bzw. dass es nur darauf ankommt, dass eine Anordnung entsprechend der Einbaulage möglich ist.

Die Unterflureinrichtung weist eine in Einbaulage unter dem Bodenniveau liegende, insbesondere dem Bodenniveau zugewandte Oberseite auf. Die Oberseite weist einen Konnektor, insbesondere einen Starkstromkonnektor auf, der vorzugsweise an der Oberseite der Unterflureinrichtung und/oder unmittelbar von der Außenseite der Unterflureinrichtung zugänglich ist. Ferner weist die Unterflureinrichtung einen in Einbaulage unterhalb der Oberseite angeordneten Hohlraum auf, der durch die Oberseite der Unterflureinrichtung begrenzt wird. Der Hohlraum kann ferner durch Seitenwände und/oder durch einen der Oberseite bzw. dem Bodenniveau abgewandten Boden begrenzt werden.

Ferner weist die Unterflureinrichtung eine in Einbaulage unterhalb der Oberseite angeordnete Flutungseinrichtung auf, die dazu ausgebildet ist, ein Fluten des Hohlraums der Unterflureinrichtung zu ermöglichen. Hierdurch wird vorzugsweise ein Aufschwimmen der Unterflureinrichtung bei einem steigenden, auf die Unterflureinrichtung wirkenden Wasserspiegel verhindert. Insbesondere ermöglicht die Flutungseinrichtung also eine Flutung der Unterflureinrichtung derart, dass bei einem steigenden Wasserpegel stets sichergestellt ist, dass der Hohlraum bis zum Wasserpegel zumindest im Wesentlichen vollständig geflutet bzw. angefüllt wird. Durch die vorschlagsgemäße Flutungseinrichtung kann sichergestellt werden, dass auch bei einem steigenden Wasserspiegel, beispielsweise im Zusammenhang mit einem Hochwasser, ein Aufschwimmen der Unterflureinrichtung verhindert wird. Insbesondere werden gegen Eindringen von Wasser abgedichtete oder abgeschlossene Hohlräume vermieden, die bei steigenden Wasserspiegel Auftrieb erzeugen würden. Hierbei hat sich herausgestellt, dass bereits ein kleinerer Auftrieb zu Unterspülungen führen kann.

Ein weiterer, auch unabhängig realisierbarer Aspekt der vorliegenden Erfindung betrifft eine Vorrichtung zur Versorgung insbesondere von Schiffen mit elektrischer Energie, wobei die Vorrichtung die zuvor beschriebene Unterflureinrichtung sowie eine von der Unterflureinrichtung abnehmbare Anschlusseinrichtung aufweist, insbesondere einen Landanschlusskasten bzw. Landanschlussschrank. Die vorschlagsgemäße Vorrichtung ist also zweiteilig gebildet. Die Anschlusseinrichtung ist in Einbaulage vorzugsweise zumindest im Wesentlichen oberhalb des Bodenniveau angeordnet und von oben an der Unterflureinrichtung fixiert. Die Anschlusseinrichtung kann von der Unterflureinrichtung gelöst und von der Unterflureinrichtung abgenommen werden. Die Anschlusseinrichtung weist einen Konnektor, insbesondere Starkstromkonnektor auf, wobei die Starkstromkonnektoren der Unterflureinrichtung und der Anschlusseinrichtung derart korrespondierend ausgebildet und zueinander angeordnet sind, dass durch Anordnung der Anschlusseinrichtung an der Unterflureinrichtung eine elektrische Verbindung zwischen dem Anschlussschrank und der Unterflureinrichtung automatisch hergestellt wird. Ferner kann die Verbindung bei Abnehmen der Anschlusseinrichtung automatisch wieder getrennt werden.

Die Verwendung der Anschlusseinrichtung bietet den Vorteil, dass Kabel oder sonstige Einrichtungen zur Versorgung insbesondere von Schiffen mit elektrischer Energie bequem oberirdisch angeschlossen werden können. Die komplexe Technik und die möglicherweise zahlreichen Konnektoren einer solchen Anschlusseinrichtung müssen nicht zwingend gegen Wassereintritt bei Untertauchen abgedichtet werden, da bei einem drohenden Hochwasser die Anschlusseinrichtung von der Unterflureinrichtung abnehmbar ist. Die vorschlagsgemäße Vorrichtung ist auf diese Weise besonders gut gegen mögliche Hochwasserschäden geschützt, denn die bevorzugt zumindest im Wesentlichen über dem Bodenniveau angeordnete Anschlusseinrichtung kann durch Abnehmen in Sicherheit gebracht werden und die Unterflureinrichtung ist ferner durch die Flutungseinrichtung gegen Aufschwimmen gesichert.

Es kann vorgesehen sein, dass der mindestens eine (Starkstrom-)konnektor der Unterflureinrichtung gegen Wassereintritt sicherbar ist, beispielsweise durch einen Deckel zur Abdichtung des Konnektors der Unterflureinrichtung gegen Wassereintritt, insbesondere auch bei Untertauchen und/oder durch eine befahrbare Abdeckplatte.

Insgesamt ermöglicht die vorschlagsgemäße Vorrichtung daher, im Fall von Hochwasser sowohl Beschädigungen durch umherschwimmende Gegenstände als auch Beschädigungen durch Aufschwimmen zu verhindern, gleichzeitig jedoch bequem zu erreichende, oberirdisch angeordnete Mittel bereitzustellen, um insbesondere Schiffe mit elektrischer Energie zu versorgen.

Gemäß einem weiteren Aspekt der vorliegenden Erfindung wird die zuvor beschriebene Vorrichtung zum Bereitstellen einer Stromversorgung, insbesondere für ein Schiff, verwendet, wobei die Anschlusseinrichtung an der unter dem Bodenniveau verankerten Unterflureinrichtung angesetzt wird, wodurch die Anschlusseinrichtung automatisch mit elektrischer Energie versorgt wird. Ferner kann die Anschlusseinrichtung die elektrische Energie einem Verbraucher, insbesondere dem Schiff, zur Verfügung stellen, insbesondere durch über dem Bodenniveau zugängliche Mittel. Die vorschlagsgemäße Verwendung ermöglicht es, die Versorgung der Anschlusseinrichtung und somit auch die von Schiffen oder anderen Verbrauchen mit elektrischer Energie zu vereinfachen, denn die Anschlusseinrichtung wird durch ansetzten an die Unterflureinrichtung automatisch elektrisch verbunden. Dies kann ohne einen Elektriker mit einer spezialisierten Ausbildung erfolgen.

Ein weiterer, auch unabhängig realisierbarer Aspekt der vorliegenden Erfindung betrifft ein Verfahren zum Sichern einer Vorrichtung zur Versorgung, insbesondere von Schiffen, mit elektrischer Energie gegen Hochwasser, wobei eine an einer stationären Unterflureinrichtung reversibel fixierte Anschlusseinrichtung gelöst und von der Unterflureinrichtung abgehoben wird, wodurch eine elektrische Verbindung automatisch getrennt wird. Dies erlaubt es, bei einem drohenden Hochwasser die Anschlusseinrichtung in Sicherheit zu bringen, ohne dass ein Spezialist zuvor die elektrischen Verbindungen lösen müsste. Daraufhin kann die Unterflureinrichtung geflutet werden, wodurch die Entstehung von Auftrieb, insbesondere aufgrund abgedichteter Hohlräume, verhindert werden kann.

Weitere Aspekte, Eigenschaften und Vorteile der vorliegenden Erfindung ergeben sich aus den Ansprüchen und aus der zeichnerischen Darstellung und nachfolgenden Beschreibung bevorzugter Ausführungsformen. In der Zeichnung zeigt:
- Fig. 1: eine perspektivische Ansicht einer vorschlagsgemäßen Unterflureinrichtung;
- Fig. 2: eine schematische Darstellung des Grundkörpers einer vorschlagsgemäßen Unterflureinrichtung;
- Fig. 3: einen Schnitt des Grundkörpers aus Fig. 2 gemäß der Schnittlinie III-III;
- Fig. 4: eine perspektivische Darstellung der vorschlagsgemäßen Unterflureinrichtung gemäß Fig. 1 mit aufgesetztem Deckel;

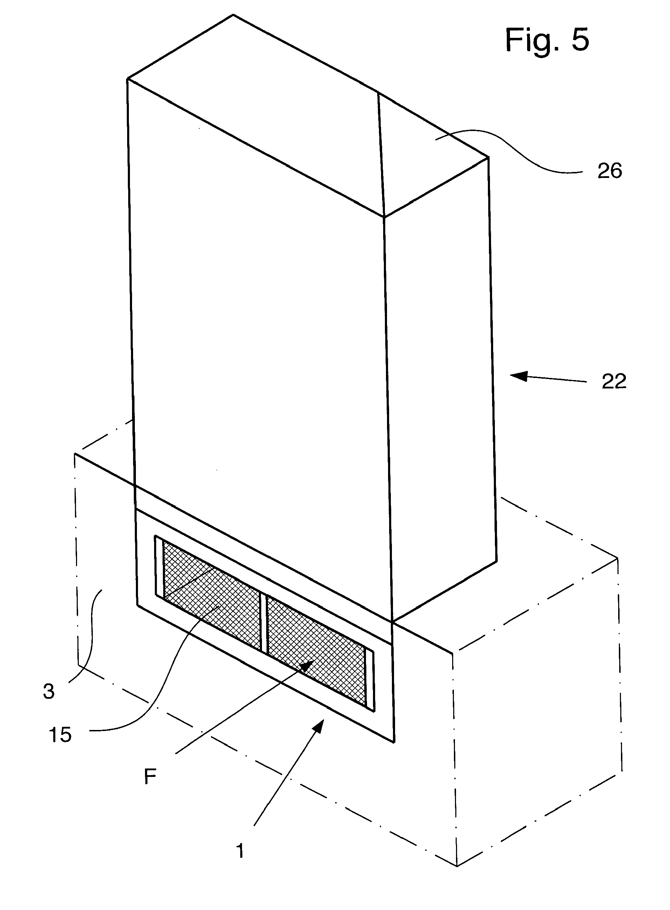

- Fig. 5: eine vorschlagsgemäße Vorrichtung zur Versorgung insbesondere von Schiffen mit elektrischer Energie;
- Fig. 6: eine schematische Frontalansicht der vorschlagsgemäßen Anschlusseinrichtung im transportablen Zustand;
- Fig. 7: eine schematische Seitenansicht der vorschlagsgemäßen Anschlusseinrichtung im transportablen Zustand;
- Fig. 8: eine frontale Ansicht der vorschlagemäßen Anschlusseinrichtung im an der nicht dargestellten Unterflureinrichtung fixierten Zustand;
- Fig. 9: eine Seitenansicht der vorschlagsgemäßen Anschlusseinrichtung im an der nicht dargestellten Unterflureinrichtung fixierten Zustand;
- Fig. 10: eine ausschnittsweise Darstellung einer Transporteinrichtung;
- Fig. 11: eine ausschnittsweise Darstellung einer Fixiereinrichtung; und
- Fig. 12: eine vereinfachte Innenansicht einer vorschlagsgemäßen Anschlusseinrichtung.

In den Figuren werden für gleiche oder ähnliche Teile dieselben Bezugszeichen verwendet, wobei entsprechende oder vergleichbare Eigenschaften und Vorteile erreicht werden können, auch wenn von einer wiederholten Beschreibung abgesehen worden ist.

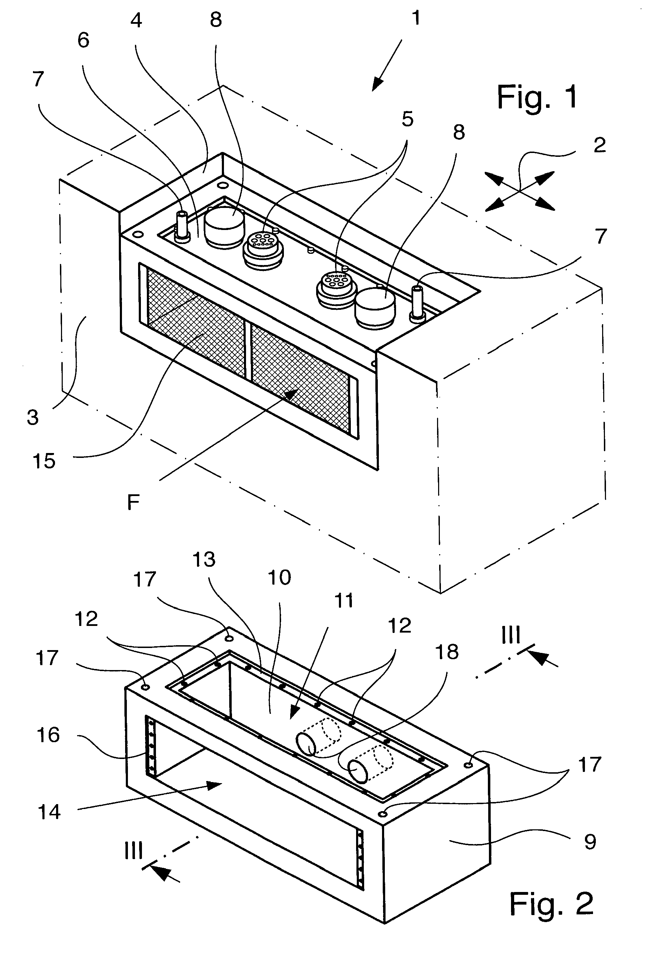

Fig. 1 zeigt eine vorschlagsgemäße Unterflureinrichtung 1, die unterhalb eines Bodenniveaus 2, vorzugsweise an einer Kante 3 eines Ufers oder Kais eingebaut ist. Vorzugsweise wird die Unterflureinrichtung 1 vollständig unterhalb des Bodenniveaus 2 angeordnet.

Die Unterflureinrichtung 1 ist in Fig. 1 in ihrer Einbaulage dargestellt, auf die sich die folgende Beschreibung bezieht. Es versteht sich, dass die Unterflureinrichtung 1 beispielsweise bei einem Transport anders ausgerichtet sein kann, weshalb die Bezugnahme auf ein Bodenniveau bzw. die Einbaulage vorzugsweise lediglich dazu dient, in verständlicher Weise die Lage von Elementen der Unterflureinrichtung 1 zueinander zu beschreiben, nicht jedoch um die Unterflureinrichtung 1 darüber hinaus zu beschränken. Die Unterflureinrichtung 1 ist jedoch besonders bevorzugt zum ortsfesten Unterflureinbau ausgebildet, insbesondere also dauerhaft wasserbeständig. Die Unterflureinrichtung kann nicht dargestellte Mittel zum dauerhaften fixieren der Unterflureinrichtung im Boden aufweisen.

Eine unter dem Bodenniveau 2 liegende und vorzugsweise dem Bodenniveau 2 zugewandte Oberseite 4 der Unterflureinrichtung 1 weist mindestens einen Starkstromkonnektor 5, im Darstellungsbeispiel zwei Starkstromkonnektoren 5 auf. Der mindestens eine Starkstromkonnektor 5 kann von einer Deckelplatte 6 gehalten bzw. getragen sein und ist insbesondere in der Einbaulage der Unterflureinrichtung 1 von oben und/oder unmittelbar von außen zugänglich.

An der Oberseite 4 der Unterflureinrichtung 1, insbesondere ebenfalls an der Deckelplatte 6 können Führungsmittel 7 vorgesehen sein, insbesondere Führungsbolzen oder, wie im Darstellungsbeispiel, Führungshülsen.

Der mindestens eine Starkstromkonnektor 5 kann mit einem Konnektordeckel 8 gegen Eintritt von Wasser geschützt werden. Hierdurch kann insbesondere eine Dichtigkeit gemäß der Schutzklasse IP68 erreicht werden.

Die Deckelplatte 6 kann Aufnahmen zur Halterung mindestens eines Konnektordeckels 8 aufweisen. Hierdurch ist es möglich, den oder die Konnektordeckel 8 an einer Position zu lagern, wo im Bedarfsfall für eine wasserfeste Abdichtung problemlos ein unmittelbarer Zugriff gewährleistet ist. Im Betrieb kann der Konnektordeckel 8 vom Starkstromkonnektor 5 entfernt werden, damit der Starkstromkonnektor 5 konnektiert werden kann. Insbesondere im Fall eines Hochwassers kann der Starkstromkonnektor 5 durch den Konnektordeckel gegen Wassereintritt geschützt werden.

Im Darstellungsbeispiel ist die Deckelplatte 6 mit Befestigungsmitteln, insbesondere Schrauben, mit einem Grundkörper 9 der Unterflureinrichtung 1 verbunden. Dies ermöglicht es, zu Montage-, Wartungs- oder Reparaturzwecken den Grundkörper 9 bevorzugt von oben zu öffnen.

Fig. 2 zeigt eine schematisch-perspektivische Darstellung des Grundkörpers 9. Der Grundkörper 9 bildet einen Hohlraum 10, der unterhalb der Oberseite der Unterflureinrichtung 1 angeordnet ist. Der Hohlraum 10 wird also insbesondere durch die Deckelplatte 6 und/oder durch die innenseitige obere Wandung des Grundkörpers 9 in Einbaulage der Unterflureinrichtung 1 begrenzt. Ferner kann der Hohlraum 10 durch Seitenwände und durch einen Boden begrenzt sein.

Im Darstellungsbeispiels ist die Unterflureinrichtung 1 bzw. der Grundkörper 9 zumindest im Wesentlichen rechteckig bzw. quarderförmig ausgebildet.

Die Unterflureinrichtung 1, insbesondere das Basiselement 9, weist vorzugsweise Beton auf oder ist zumindest im Wesentlichen aus Beton gebildet, insbesondere als Fertigbetonteil.

Der Grundkörper 9 kann eine in Einbaulage an der Oberseite angeordnete Öffnung 11 aufweisen, insbesondere einen Durchbruch, um einen Zugang zu dem Hohlraum 10 von oben zu ermöglichen. Der Grundkörper 9 kann Verbindungsmittel 11, insbesondere eingelassene Gewinde, aufweisen, um die Deckelplatte 6 an dem Grundkörper 9 befestigen zu können. Die Deckelplatte 6 ist vorzugsweise derart ausgebildet, dass diese die obere Öffnung des Grundkörpers 9 zumindest im Wesentlichen verschließen kann. Hierzu kann die (obere) Öffnung 11 des Grundkörpers 9 einen Rahmen 13 aufweisen, in dem auch die Befestigungsmittel 12 angeordnet sein können, insbesondere eingelassene Gewinde. Der Rahmen 13 kann so ausgebildet sein, dass er die Deckelplatte 6 aufnehmen und ein Auflager für diese bilden kann. Die Deckelplatte 6 kann an dem Grundkörper 9 mittels der Befestigungsmittel befestigt, insbesondere verschraubt werden. Der Rahmen 13 kann gegenüber einer Oberfläche des Grundkörpers 9 an der Oberseite 4 zurückspringen, um einen flächenbündigen bzw. versenkten Einbau der Deckelplatte 6 zu ermöglichen.

Der Grundkörper 9 kann eine weitere Öffnung 14 aufweisen, die vorzugsweise in Einbaulage der Unterflureinrichtung 1 seitlich und vorzugsweise offen, insbesondere Teil einer Kaimauer bildend, angeordnet ist. Die Öffnung 14 ist vorzugsweise dazu geeignet, einen fluidischen Zugang von außen zu dem Hohlraum 10 zu ermöglichen. Wie in Fig. 1 dargestellt, kann die Öffnung 14 mit einem Gitter 15 abgedeckt werden, damit der Hohlraum 10 vor eintretenden Gegenständen geschützt wird, insbesondere zum Schutz vor Nagetieren.

Die Öffnung 14 kann zumindest an seitlichen Kanten Befestigungsmittel 16 aufweisen, insbesondere eingelassene Gewinde, um eine sichere Befestigung des Gitters 15 zu ermöglichen. Die Befestigungsmittel 16 können in einen Bereich des Grundkörpers 9 angeordnet sein, der gegenüber einer Seitenfläche des Grundkörpers leicht zurück springt, wodurch ein flächenbündiger Einbau des Gitters 15 ermöglicht wird.

Die Öffnung 14 der Unterflureinrichtung 1 bzw. die Flutungseinrichtung ist vorzugsweise gegen Eintritt von Gegenständen mit einem Querschnitt größer als 4 cm², insbesondere größer als 3 oder 2 cm² gesichert. Hierdurch kann sichergestellt werden, dass innerhalb der Unterflureinrichtung 1 befindliche Kabel und/oder Konnektorabschnitte nicht durch eindringende Gegenstände oder Tiere wie Ratten beschädigt werden können. In einer alternativen Ausführungsform ist die Öffnung 14 durch eine oder mehrere Rohrleitungen gebildet, die vorzugsweise ebenfalls derart eingerichtet bzw. ausgebildet sind, dass ein Eindringen von Gegenständen und Ratten wirksam verhindert wird.

Ferner kann die Unterflureinrichtung 1, insbesondere der Grundkörper 9, an der Oberseite 4 Befestigungsmittel 17, insbesondere eingelassene Gewinde und/oder außerhalb des Rahmens 13, zur Befestigung bzw. Verankerung aufweisen. Vorzugsweise sind mindestens zwei, im Darstellungsbeispiel vier oder mehr Befestigungsmittel 17 vorgesehen, insbesondere in Einbaulage von oben zugängliche, eingelassene Gewinde in den Ecken des Grundkörpers 9. Diese können die Befestigung einer Anschlusseinrichtung wie einem Landanschlussschrank oder Landanschlusskasten oder einer Abdeckung ermöglichen.

Gemäß einem Aspekt der vorliegenden Erfindung sind die Verbindungsmittel 12, 16 und/oder 17 als Hülsen, insbesondere Gewindehülsen ausgebildet und/oder in dem bevorzugt aus Beton hergestellten Basiselement 9 eingelassen oder auf andere Weise fest integriert.

Der Grundkörper 9 kann mindestens einen Durchbruch 18, insbesondere eine Bohrung, aufweisen. Der Durchbruch 18 ist bevorzugt an einer der Öffnung 14 abgewandten oder gegenüberliegenden Seite angeordnet, in Einbaulage also an einer Rückseite des Grundkörpers 9. Alternativ oder zusätzlich kann der Durchbruch 18 auch an einer Seitenwand oder im Boden gebildet sein. Der Durchbruch 18 kann dazu verwendet werden, den oder die Starkstromkonnektoren 5 mit einem korrespondierenden Erdkabel verbinden zu können. Der Durchbruch 18 ist also insbesondere dazu geeignet, ein Erdkabel in den Hohlraum zu führen, damit dieses, insbesondere wasserdicht, mit dem oder den Starkstromkonnektoren 5 verbunden werden kann.

Im Darstellungsbeispiel bildet die Öffnung 14, insbesondere in Verbindung mit dem Gitter 15, eine Flutungseinrichtung F. Die Flutungseinrichtung F ist vorzugsweise dazu ausgebildet, bei steigendem, auf die Unterflureinrichtung 1 wirkendem Wasserspiegel ein zumindest im Wesentlichen vollständiges Fluten des Hohlraums 10 zu ermöglichen. Alternativ oder zusätzlich ist die Flutungseinrichtung F dazu ausgebildet, bei sinkendem, auf die Unterflureinrichtung 1 wirkendem Wasserspiegel ein zumindest im Wesentlichen vollständiges Leerlaufen des Hohlraums 10 zu ermöglichen. Es sind prinzipiell auch andere Realisierungen der vorschlagsgemäßen Flutungseinrichtung F denkbar, beispielsweise über Rohre o. dgl. Die Verwendung der Öffnung 14 in Verbindung mit dem Gitter 15 ist jedoch besonders bevorzugt, da ein zügiges Fluten und Entleeren des Hohlraums 10 gewährleistet werden kann, ein Aufschwimmen also auch bei zügig steigendem Wasserspiegel verhindert werden kann.

Im Darstellungsbeispiel gemäß Fig. 2 weist die Flutungseinrichtung F die Öffnung 14 auf, die sich zumindest im Wesentlichen über die gesamte vertikale Erstreckung des Grundkörpers 9 oder Hohlraums 10 in der Einbaulage erstreckt. Insbesondere kann vorgesehen sein, dass die Öffnung 14 zumindest in einem Bereich der Unterseite bzw. des Bodens des Grundkörpers 9 in der Einbaulage gebildet ist. Insbesondere kann die Öffnung 14 flächenbündig mit einer inneren Bodenfläche des Grundkörpers 9 oder darunter enden. Hierdurch ist sichergestellt, dass steigendes Hochwasser ungehindert in den Grundkörper 9 eintreten und diesen fluten kann und dass das eintretende Wasser bei sinkendem Wasserstand auch ungehindert wieder aus dem Hohlraum 10 abfließen kann.

Ein steigender, auf die Unterflureinrichtung 1 wirkender Wasserstand im Sinne der vorliegenden Erfindung bedeutet insbesondere, wenn Wasser in der unmittelbaren Umgebung der Unterflureinrichtung 1 mit dem Grundkörper in Kontakt kommt. Wenn der Wasserstand über den Bereich eines Bodens der Unterflureinrichtung 1 steigt, erreicht, kann das Wasser über die Flutungseinrichtung F in den Hohlraum 10 gelangen.

Um ein Entweichen von Luft aus dem Hohlraum 10 sicherzustellen, kann ein Entlüftungsmittel im Bereich der Oberseite 4 der Unterflureinrichtung 1 vorgesehen sein. Besonders bevorzugt ist es, wie im Darstellungsbeispiel, dass sich die Öffnung 14 in in Einbaulage vertikaler Richtung zumindest im Wesentlichen über die vertikale Erstreckung des Hohlraums 10 erstreckt bzw. dass die Öffnung 14 den Hohlraum 10 seitlich bzw. vertikal zumindest im Wesentlichen vollständig öffnet.

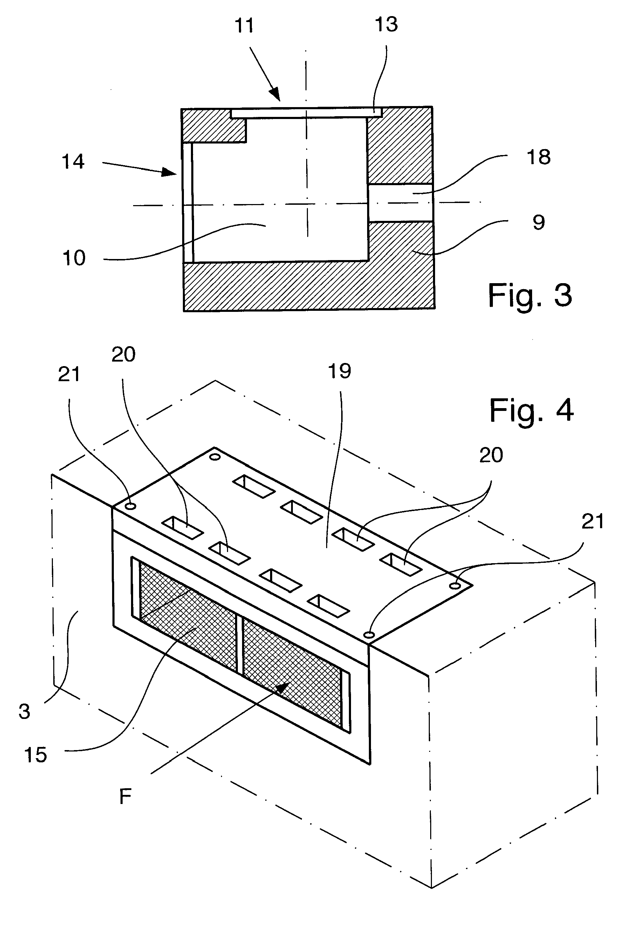

Wie im Schnitt in Fig. 3 näher zu sehen, erstreckt sich die Flutungseinrichtung lediglich nicht über ein geringes Restvolumen zwischen einer Innenseite der Oberkante des Grundkörpers 9 in Einbaulage und der in Fig. 3 nicht dargestellten Deckelplatte 6. Dieses geringe Restvolumen reicht jedoch nicht aus, einen ausreichenden Auftrieb zu erzeugen, um die Unterflureinrichtung 1 zum Aufschwimmen zu bewegen, zumal die Deckelplatte 6 bevorzugt nicht luftdicht an den Grundkörper 9 angebunden ist oder Entlüftungsmittel aufweist, weshalb der vollständige Hohlraum 10 flutbar ist.

Die vertikale Erstreckung der Öffnung 14 über zumindest im Wesentlichen die gesamte Höhe des Hohlraums 10 bietet ferner den Vorteil, dass ein zügiges und vollständiges Leerlaufen des Hohlraums 10 gewährleistet ist. Zudem ermöglicht die Öffnung 14 ein zügiges Trocknen des Hohlraums 10 nach einer Flutung.

In einer bevorzugten Ausführungsform erstreckt sich die Flutungseinrichtung über mehr als 30 %, vorzugsweise mehr als 50 %, insbesondere mehr als 70 % einer Seite oder Seitenwand der Unterflureinrichtung 1, insbesondere in vertikaler Erstreckung. Weiter kann vorgesehen sein, dass die Flutungseinrichtung eine Seite oder Seitenwand der Unterflureinrichtung 1 oder Fläche hiervon zu mehr als 30 %, vorzugsweise mehr als 50 %, insbesondere mehr als 70 % öffnet, insbesondere durch die Öffnung 14 und/oder unter fluidischer Verbindung des Hohlraums 10 mit der Außenseite der Unterflureinrichtung 1.

Wie in Fig. 4 näher dargestellt, kann die Unterflureinrichtung 1 durch eine vorzugsweise befahrbare Abdeckung 19 abgedeckt werden. Die Abdeckung 19 und/oder die Unterflureinrichtung 1 können derart angeordnet und ausgebildet sein, dass eine Oberfläche der Abdeckung 19 flächenbündig mit dem Bodenniveau 2 bzw. mit einem durch das Bodenniveau 2 gebildeten Ebene ist. Dies erlaubt es, die Unterflureinrichtung 1, insbesondere die Konnektoren 5, gegen mechanische Beschädigung zu schützen und eine Nutzung der über der Unterflureinrichtung 1 befindlichen Oberfläche zu ermöglichen. Die Abdeckung 19 kann Lüftungslöcher 20 aufweisen. Ferner kann die Abdeckung 19 Befestigungsmittel 21 aufweisen, insbesondere Schrauben mit entsprechenden Aufnahmen, um die Abdeckung 19 an den Befestigungsmitteln 17 des Grundkörpers 9 befestigen zu können.

Die Befestigungsmittel 21 der Abdeckung 19 sind vorzugsweise dazu ausgebildet und eingerichtet, mit den Befestigungsmitteln 17 der Unterflureinrichtung in Eingriff zu kommen oder auf sonstige Weise bevorzugt formschlüssig eine Verbindung zu ermöglichen.

Besonders bevorzugt ist vorgesehen, dass an der Unterflureinrichtung 1eine Anschlusseinrichtung 22 angesetzt, insbesondere aufgesetzt bzw. angebracht, fixiert oder befestigt werden kann. Hierzu kann die Abdeckung 19 abgenommen werden. Ferner werden bevorzugt die Konnektordeckel 8 entfernt.

Die Anschlusseinrichtung 22 ist insbesondere als Landanschlussschrank bzw. Landanschlusskasten ausgebildet. Die Anschlusseinrichtung 22 kann zu diesem Zwecke einen oder mehrere Konnektoren aufweisen, die zur Versorgung, insbesondere von Schiffen, mit elektrischer Energie ausgebildet sind.

Die Anschlusseinrichtung 22 ist besonders bevorzugt von der Unterflureinrichtung 1 abnehmbar ausgebildet und kann an der Unterflureinrichtung 1, wenn sich die Unterflureinrichtung 1 in ihrer Einbaulage befindet, von oben an der Unterflureinrichtung 1 fixiert werden.

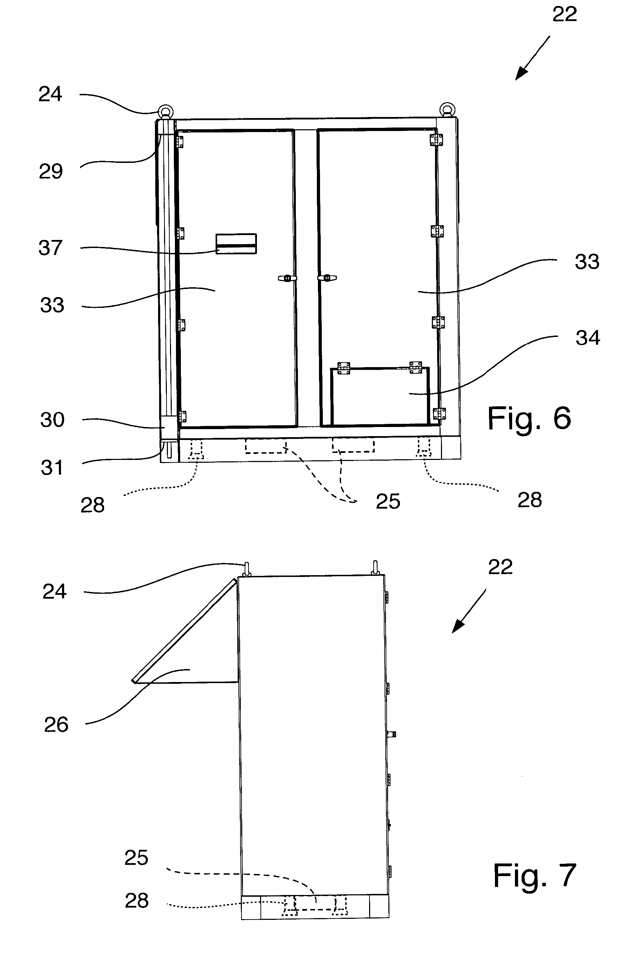

Fig. 6 zeigt eine frontale Ansicht und Fig. 7 eine seitliche Ansicht einer vorschlagsgemäßen Anschlusseinrichtung 22, wobei in Fig. 6 an der linken Seite der Anschlusseinrichtung 22 eine Befestigungseinrichtung 23 und eine Transporteinrichtung 24 dadurch zu sehen sind, dass zu Veranschaulichungszwecken ein entsprechender Bereich der Front der Anschlusseinrichtung 22 nicht dargestellt ist.

Gemäß einem auch unabhängig realisierbaren Aspekt der vorliegenden Erfindung weist die Anschlusseinrichtung 22 an einer Seite, vorzugsweise auf der Unterseite, einen oder mehrere (Starkstrom-)Konnektoren 25 auf, die vorzugsweise zu dem oder den (Starkstrom-)Konnektoren 5 der Unterflureinrichtung 1 derart korrespondierend ausgebildet und angeordnet ist/sind, dass durch Anordnung der Anschlusseinrichtung 22 an der Unterflureinrichtung 1 automatisch eine elektrische Verbindung zwischen der Anschlusseinrichtung 22 und der Unterflureinrichtung 1 hergestellt wird.

Die Anschlusseinrichtung 22 wird im Folgenden bezugnehmend auf eine bevorzugte Einbaulage bzw. Montagelage beschrieben, bei der die Anschlusseinrichtung 22 auf die Unterflureinrichtung 1 aufgesetzt ist, wodurch an korrespondierenden Positionen an der Unterflureinrichtung 1 und der Anschlusseinrichtung 22 die Konnektoren 5, 25 eine elektrische Verbindung zwischen der Unterflureinrichtung 1 und der Anschlusseinrichtung 22 herstellen. Die Seite der Anschlusseinrichtung 22, die die Konnektoren 25 aufweist, stellt im Folgenden bevorzugt den Boden oder Bodenbereich der Anschlusseinrichtung 22 dar. Hierauf bezieht sich im Folgenden die Beschreibung der Lage weiterer Teile der Anschlusseinrichtung 22.

Die Anschlusseinrichtung 22 weist vorzugsweise zu den Führungsmitteln 7 korrespondierende Führungsmittel 28 auf. Die Führungsmittel 7, 28 können so ausgebildet sein, dass bei Aufsetzen der Anschlusseinrichtung 22 auf die Unterflureinrichtung 1 die Konnektoren 5, 25 automatisch in eine zueinander passende Ausrichtung gebracht werden, so dass ein automatisches Konnektieren ermöglicht wird, ohne dass eine Gefahr der Konnektorbeschädigung besteht. Die Führungsmittel 7, 28 sind hierzu vorzugsweise so angeordnet und ausgebildet, dass der oder die Konnektoren 5 der Unterflureinrichtung 1 und der oder die Konnektoren 25 der Anschlusseinrichtung 22 durch die Führungsmittel 7, 28 bei Annähern der Anschlusseinrichtung 22 an die Unterflureinrichtung 1 automatisch in eine Lage zueinander gebracht werden, dass ein weiteres Annähern und Aufsetzen der Anschlusseinrichtung 22 auf die Unterflureinrichtung 1 zu einem automatischen Konnektieren der Konnektoren 5, 25 bzw. eine automatische Verbindung der Anschlusseinrichtung 22 mit dem Stromnetz ermöglicht. Bei den Führungsmitteln 7, 28 kann es sich um korrespondierende Führungshülsen und Führungszapfen handeln, es sind aber auch andere Lösungen möglich.

Die Konnektoren 5, 25 sind bevorzugt als Steckverbinder ausgebildet. Insbesondere ist der Konnektor 5 als Kupplung und der Konnektor 25 als korrespondierender Stecker ausgebildet. Es kann sich um Steckverbinder mit drei Phasen, einem Nullleiter und einem Schutzleiter, sogenannte 3L+N+PE Konnektoren handeln. Zusätzlich weisen die Konnektoren 5, 25 vorzugsweise mindestens eine Steuer- oder Signalleitung auf. Insbesondere weisen die Konnektoren 5, 25 mehr als 2, vorzugsweise mehr als 5, im Darstellungsbeispiel zehn Steuer- bzw. Signalleitungen auf.

Die Konnektoren 5, 25 sind vorzugsweise für eine hohe Stromtragfähigkeit ausgelegt, vorzugsweise für mehr als 120 A, insbesondere mehr als 200 A, im Darstellungsbeispiel 500 A oder mehr. Die Konnektoren 5, 25 können ferner Verbindungseinrichtungen für Steuersignale, Nachrichtentechnik o. dgl. aufweisen.

Nicht dargestellt sind optionale Konnektoren, um die Anschlusseinrichtung 22 zusätzlich mit Wasser, Gas, Druckluft o. dgl. zu versorgen. Wenn entsprechende Konnektoren alternativ oder zusätzlich vorgesehen sind, ist es besonders bevorzugt, dass auch solche Konnektoren zueinander korrespondierend ausgebildet und an zueinander korrespondierenden Positionen an der Unterflureinrichtung 1 und der Anschlusseinrichtung 22, insbesondere an der Oberseite 4 der Unterflureinrichtung 1 und der Unterseite der Anschlusseinrichtung 22 angeordnet sind, so dass durch Aufsetzen der Anschlusseinrichtung 22 auf die Unterflureinrichtung 1 ein automatisches Verbinden und/oder durch Abnehmen der Anschlusseinrichtung 22 von der Unterfluteinrichtung 1 eine automatische Trennung ermöglicht wird.

Die Anschlusseinrichtung 22 weist vorzugsweise eine, insbesondere mehrere, im Darstellungsbeispiel vier Transporteinrichtungen 24 auf. Die Transporteinrichtung 24 kann ein Auge einer Augenschraube, eine Öse, ein Haken oder ein sonstiges Mittel aufweisen, mit dem ein Anheben der Anschlusseinrichtung 22 mittels eines Krans o. dgl. ermöglicht wird.

Die Anschlusseinrichtung 22 kann eine Abdeckung, insbesondere ein Dach 26, aufweisen. Insbesondere ist das Dach 26 als Spitzdach ausgeführt, um eine unsachgemäße Nutzung der Anschlusseinrichtung 22 im Dachbereich, insbesondere das Besteigen durch Personen oder Tiere zu verhindern. Das Dach 26 kann angelenkt bzw. abklappbar sein, wie in Fig. 7 dargestellt. Es sind jedoch auch alternative Lösungen möglich, bei denen das Dach 26 abnehmbar oder auf sonstige Weise befestigt ist.

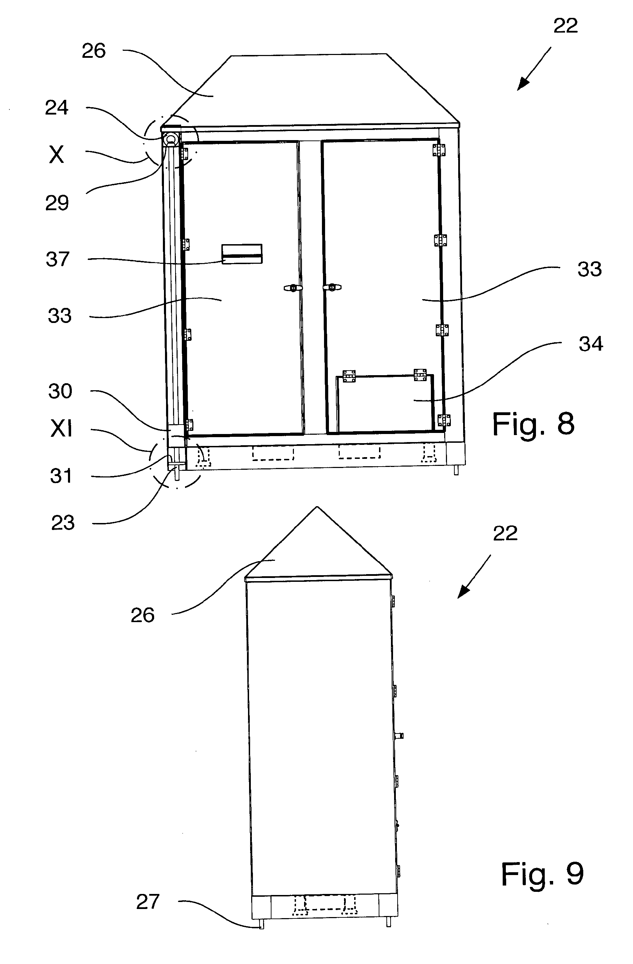

In Fig. 8 ist eine frontale Ansicht und in Fig. 9 eine Seitenansicht der Anschlusseinrichtung 22 mit aufgesetztem Dach 26 dargestellt. Wie in Fig. 6 ist auch in Fig. 8 im linken Randbereich der Anschlusseinrichtung 22 von der Darstellung eines Abschnitts der Frontpartie abgesehen worden, um die Befestigungseinrichtung 23 und die Transporteinrichtung 24 sichtbar zu machen, die ansonsten bevorzugt hinter einer Front der Anschlusseinrichtung 22 verdeckt sind. Die Befestigungseinrichtung 23 ist vorzugsweise dazu ausgebildet, in das Befestigungsmittel 17 einzugreifen, wodurch die Anschlusseinrichtung 22 an die Unterflureinrichtung 1 angezogen oder auf sonstige Weise befestigt werden kann.

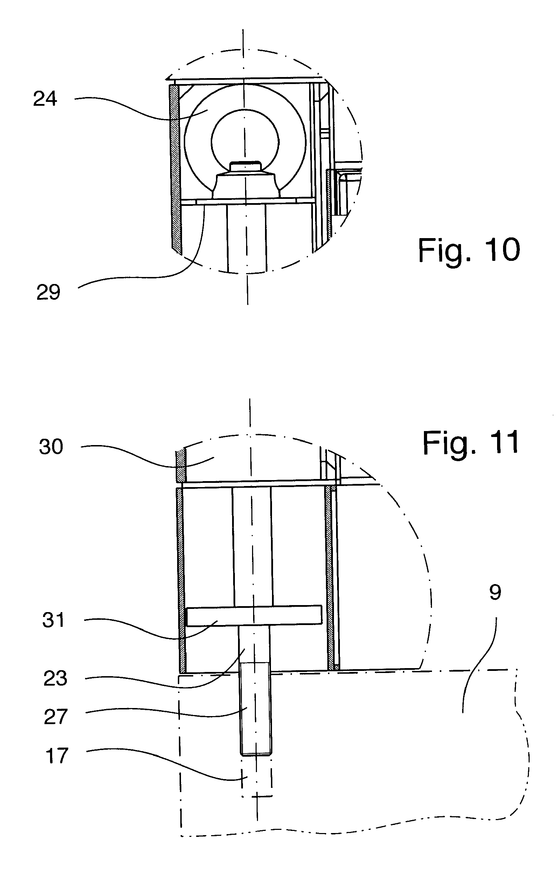

In Fig. 10 ist in einem Ausschnitt aus Fig. 8 die Transporteinrichtung 24 im Detail dargestellt. Im Darstellungsbeispiel weist die Transporteinrichtung 24 eine Öse auf, insbesondere ein Auge einer Augenschraube. Es sind alternativ oder zusätzlich jedoch auch Transporteinrichtungen mit sonstigen Haken, Ösen oder Einrichtungen möglich, die vorzugsweise ein Anheben der Anschlusseinrichtung 22 mittels eines Krans ermöglichen. Im Ausschnitt gemäß Fig. 10 ist die Transporteinrichtung 24 in der Anschlusseinrichtung 22, insbesondere in einem Holm oder Vierkantprofil aufgenommen, insbesondere versenkt. Hierdurch ist es möglich, eine Verwendung der Transporteinrichtung 24 zum Abheben der Anschlusseinrichtung 22 von der Unterflureinrichtung 1 zu verhindern, insbesondere wenn und solange die Anschlusseinrichtung 22 mit der Unterfluteinrichtung 1 verbunden ist.

Die Transporteinrichtung 24 kann vorzugsweise dadurch zugänglich gemacht werden, dass sie aus der Anschlusseinrichtung 22 herausbewegt wird oder auf sonstige Weise von außen zugänglich gemacht wird, so dass ein Kran o. dgl. die Anschlusseinrichtung 22 bewegen, insbesondere von der Unterflureinrichtung 1 abziehen kann, was in Fig. 6 und 7 dargestellt ist.

In Fig. 11 ist die Befestigungseinrichtung 23 in einem Ausschnitt aus Fig. 8 dargestellt. Die Befestigungseinrichtung 23 weist vorzugsweise ein Verbindungsmittel 27 auf, das vorzugsweise mit dem Verbindungsmittel 17 der Unterflureinrichtung 1 korrespondiert, insbesondere in Form und Lage. Insbesondere kann das Verbindungsmittel 17. ein Gewinde, eine Schraube, eine Gewindestange o. dgl. aufweisen, während das Gewinde kompatibel ist mit einem Gewinde des Verbindungsmittels 27 ist, das als Außengewinde, Mutter, Gewindehülse o. dgl. ausgebildet sein kann. Fig. 11 ist das Befestigungsmittel 17 der Unterflureinrichtung 1 und der Grundkörper 9 zu Veranschaulichungszwecken teilweise in gestrichelt angedeutet. In Fig. 11 ist das Befestigungsmittel 27 mit dem Befestigungsmittel 17 in Eingriff und befestigt auf diese Weise die Anschlusseinrichtung 22 an der Unterflureinrichtung 1.

Die Anschlusseinrichtung 22 kann von der Unterflureinrichtung 1 gelöst werden, indem das Befestigungsmittel 27 aus dem Eingriff/Formschluss mit dem Befestigungsmittel 17 gebracht wird, insbesondere durch herausschrauben. Nach Lösen der Anschlusseinrichtung 22 von der Unterflureinrichtung 1 kann die Anschlusseinrichtung 22 abgenommen werden, wodurch die elektrische Verbindung der Starkstromkonnektoren 5, 25 automatisch getrennt wird. Danach können die Starkstromkonnektoren 5 mit den Abdeckkappen 8 wasserdicht verschlossen und die Unterflureinrichtung 1 mit der Abdeckung 19 abgedeckt werden.

Zur Montage der Anschlusseinrichtung 22 kann in umgekehrter Reihenfolge die Abdeckung 19 nach Lösen der Befestigungsmittel 21 entfernt werden.

Nachdem die Abdeckung 19 entfernt ist, können die Abdeckungen 8 der Konnektoren 5 von den Konnektoren 5 entfernt und ggf. auf entsprechenden Halteeinrichtungen der Unterfluteinrichtung 1 neben den Konnektoren 5 gelagert werden. Daraufhin kann die Anschlusseinrichtung 22 auf die Unterflureinrichtung 1 aufgesetzt werden, wodurch vorzugsweise ein automatisches Verbinden des Starkstromkonnektors 25 der Anschlusseinrichtung 22 mit dem Starkstromkonnektor 5 der Unterflureinrichtung 1 ermöglicht wird.

Gemäß einem besonders bevorzugten Aspekt der vorliegenden Erfindung, der auch unabhängig realisiert werden kann, stehen die Verbindungseinrichtung 23 und die Transporteinrichtung 24 der Anschlusseinrichtung 22 miteinander in Beziehung. Es ist bevorzugt, dass die Befestigungseinrichtung 27 mittels der Transporteinrichtung 24 betätigt werden kann. Es kann insbesondere vorgesehen sein, dass das Gewinde 27 durch Drehung der Transporteinrichtung 24 in die Befestigungseinrichtung 17 eingedreht oder auch aus dieser herausgedreht werden kann.

Besonders bevorzugt führt der Befestigungsvorgang, bei dem die Anschlusseinrichtung 22 mittels der Befestigungseinrichtung 23, und vorzugsweise der Befestigungsmittel 27 und 17 an der Unterflureinrichtung 1 befestigt wird, dazu, dass die Transporteinrichtung 24 unzugänglich für einen Transport, deaktiviert, bedeckt und/oder versenkt wird. Auf diese Weise kann sichergestellt werden, dass ein Anheben der Anschlusseinrichtung 22 durch einen Kran o. dgl. erst dann möglich ist, wenn die Befestigungseinrichtung 27 von der Befestigungseinrichtung 17 wieder gelöst ist. Durch Lösen der Befestigungseinrichtung 27 der Anschlusseinrichtung 22 von der Befestigungseinrichtung 17 der Unterflureinrichtungwodurch die Transporteinrichtung 24 wieder zugänglich, aktiv, offen und/oder aus der versenkten Stellung herausbewegt wird. Dies verhindert ein versehentliches Anheben und Beschädigen der Unterflureinrichtung 1.

Bevorzugt ist vorgesehen, dass die Befestigungseinrichtung 23 und die Transporteinrichtung 24 unmittelbar miteinander verbunden oder sogar einstückig miteinander gebildet sind. Im Darstellungsbeispiel, wie in Fig. 6 und 8 zu sehen, ist die Transporteinrichtung 24 über eine Stange unmittelbar mit der Befestigungseinrichtung 23 verbunden oder die Transporteinrichtung 24 und die Befestigungseinrichtung 27 sind über eine gemeinsame Stange gebildet bzw. verbunden. Auf diese Weise kann die Befestigungseinrichtung 23 mittels der Transporteinrichtung 24 angetrieben bzw. an mit der Befestigungseinrichtung 17 befestigt oder von der Befestigungseinrichtung 17 gelöst werden.

Zur Fixierung der Anschlusseinrichtung 22 kann diese auf die Unterflureinrichtung 1 aufgesetzt werden. Dann kann die Anschlusseinrichtung 22 an der Unterflureinrichtung 1 durch befestigen der Befestigungseinrichtung 23 an der Befestigungseinrichtung 17 fixiert werden. Vorzugsweise kann die Befestigungseinrichtung hierbei durch die Transporteinrichtung 24 angetrieben werden. Weiter ist bevorzugt, dass durch den Befestigungsprozess die Transporteinrichtung 24 für einen Transport unzugänglich wird, im Darstellungsbeispiel dadurch, dass die Transporteinrichtung 24 versenkt wird. Dies kann im Darstellungsbeispiel automatisch dadurch realisiert werden, dass die Befestigungseinrichtungen 17, 23 Gewinde aufweisen und ein Drehen über die Gewinde zu einem Versenken der Transporteinrichtung 24 fürht.

Zum Abnehmen oder Abziehen der Anschlusseinrichtung 22 ist es bevorzugt, dass die Befestigungseinrichtung 23 von der Befestigungseinrichtung 17 gelöst wird, wodurch die Transporteinrichtung 24 freigegeben werden kann. Insbesondere ist vorgesehen, dass die Befestigungseinrichtung 23 mittels der Transporteinrichtung 24 bewegbar, insbesondere rotierbar ist. Die Befestigungseinrichtung 23 kann aus der Befestigungseinrichtung 17 herausbewegt, im Fall von Gewinden herausgedreht werden, vorzugsweise wodurch die Transporteinrichtung 24 ausgefahren und somit für einen Transport zugänglich wird. Es sind aber auch andere Alternativen möglich zu verhindern, dass die Transporteinrichtung 24 zugänglich ist, solange die Anschlusseinrichtung 22 befestigt ist.

Die Anschlusseinrichtung 22 weist vorzugsweise mindestens einen Anschlag 29 auf, der als Gegenlager für die Befestigungseinrichtung 23 dient und es ermöglicht, die Anschlusseinrichtung 22 an die Unterflureinrichtung 1 anzuziehen. Die Befestigungsposition der Befestigungseinrichtung 23 ist in Fig. 8 dargestellt, wobei die Transporteinrichtung 24 gegen den Anschlag 29 der Anschlusseinrichtung 22 gezogen wird und somit ein Gegenlager für die Befestigungseinrichtung 23 bildet. Es sind jedoch auch andere Formen von Gegenlagern möglich.

Die Anschlusseinrichtung 22 weist vorzugsweise einen Anschlag 30 für die Transporteinrichtung 24 auf. Im Darstellungsbeispiel gemäß Fig. 6 und 8 sowie in der Detaildarstellung gemäß Fig. 11 weist die Transporteinrichtung 24 ferner ein Gegenlager 31 auf, das zum Anheben der Anschlusseinrichtung 22 formschlüssig an dem Anschlag 30 anliegt. Hierdurch wird eine Kraftübertragung auf die Anschlusseinrichtung 22 ermöglicht.

In synergistischer Weise führt die Kombination aus Transporteinrichtung 24 und Befestigungseinrichtung 23 mit den jeweiligen Anschlägen 29, 30 und den Gegenlagern 31 und in Form der Transporteinrichtung 24 dazu, dass die Kombination aus Befestigungseinrichtung 23 und Transporteinrichtung 24 aus der Anschlusseinrichtung 22 nicht herausfallen kann, da für Bewegungen in beide Richtungen jeweils ein Anschlag und ein Gegenlager vorgesehen sind, die im Ergebnis durch Formschluss ein Herausfallen verhindern.

Gemäß einem Aspekt der vorliegenden Erfindung, der auch unabhängig realisiert werden kann, wird eine Vorrichtung mit der vorschlagsgemäßen Unterflureinrichtung 1 und der vorschlagsgemäßen Anschlusseinrichtung 22 dazu verwendet, eine Stromversorgung zur Verfügung zu stellen, insbesondere für ein Schiff. Hierbei wird die Anschlusseinrichtung 22 an der unter dem Bodenniveau verankerten Unterflureinrichtung 1 angesetzt, insbesondere von oben auf die Unterflureinrichtung 1 aufgesetzt und vorzugsweise fixiert, wodurch die Anschlusseinrichtung (voll-)auto-matisch mit elektrischer Energie versorgt wird bzw. mit dem Stromnetz verbunden wird. Ferner ist vorgesehen, dass die Anschlusseinrichtung 22 die elektrische Energie für einen Verbraucher, insbesondere einem Schiff, zur Verfügung stellt.

Gemäß einem weiteren, auch unabhängig realisierbaren Aspekt der vorliegenden Erfindung wird eine vorschlagsgemäße Vorrichtung mit einer Unterflureinrichtung 1 und einer Anschlusseinrichtung 22 zur Versorgung, insbesondere von Schiffen, mit elektrischer Energie gegen Hochwasser gesichert, indem die an der stationären Unterflureinrichtung 1 reversibel fixierte Anschlusseinrichtung 22 gelöst und von der Unterflureinrichtung 1 abgehoben wird, wodurch eine elektrische Verbindung automatisch getrennt wird. Gemäß einem bevorzugten Aspekt wird die Unterflureinrichtung 1 daraufhin geflutet. Hierdurch kann einem Aufschwimmen der Unterflureinrichtung 1 und einer Beschädigung hierdurch vorgebeugt werden. Weiter ist bevorzugt, dass der oder die Konnektoren 5 der Unterflureinrichtung 1 zur Stromversorgung der Anschlusseinrichtung 22 nach Entfernen der Anschlusseinrichtung 22 gegen Wassereintritt gesichert werden, insbesondere durch Verschließen.

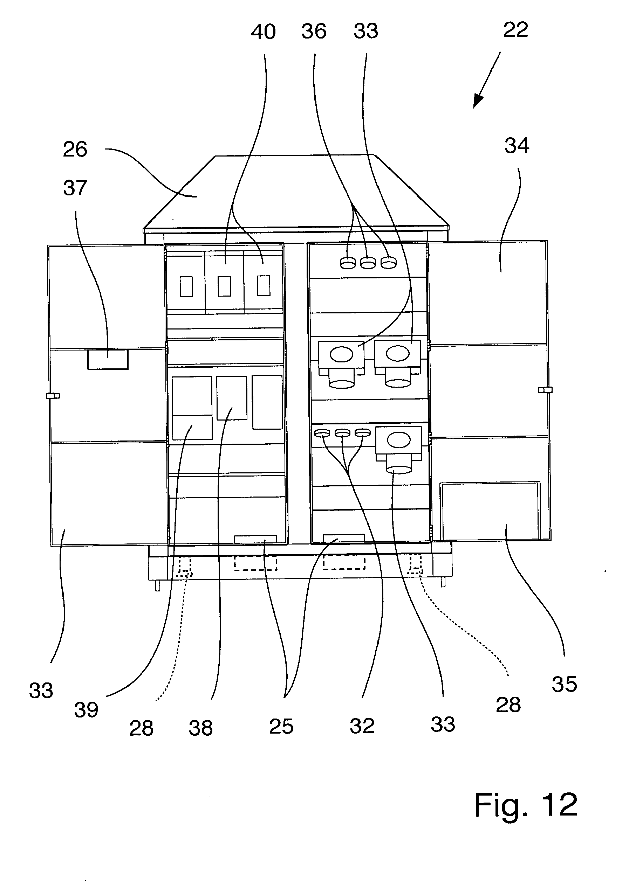

Fig. 12 zeigt beispielhaft eine schematische Innenansicht einer Anschlusseinrichtung 22. Die Konnektoren 25 der Anschlusseinrichtung 22 sind vorzugsweise dazu ausgebildet, das Innere der Anschlusseinrichtung 22 mit dem Stromnetz zu verbinden. Insbesondere sind die Konnektoren 25 auf der Innenseite der Anschlusseinrichtung 22 mit Standardschnittstellen verbunden, insbesondere mit Schutzkontakt-Steckdosen 32 und/oder Drehstromkonnektoren 33, insbesondere Steckverbinder gem. IEC 60309, beispielsweise des Typs "3L+N+PE, 6h". Die Schutzkontakt-Steckdosen 32 und/oder Drehstromkonnektoren 33 können über Sicherungsautomaten der Anschlusseinrichtung 22 abgesichert bzw. über eine Steuerungseinrichtung der Anschlusseinrichtung 22 gesteuert sein. Wenn weitere Dienste zur Verfügung gestellt werden (Gas, Wasser, Nachrichtentechnik, Netzwerkdienste), können auch diese über eine Steuerungseinrichtung der Anschlusseinrichtung 22 gesteuert sein oder abgerechnet bzw. einem Nutzer zugeordnet werden. Für die Zuordnung kann sich ein Nutzer mittels einer Identifikationseinrichtung der Anschlusseinrichtung 22 identifizieren.

Alternativ oder zusätzlich ist vorgesehen, dass die Stromversorgung der gesamten Anschlusseinrichtung 22 und/oder einzelner von dieser zur Verfügung gestellter Konnektoren über eine Rundsteueranlage 39 schaltbar ist/sind. Dies ermöglicht es, die Anschlusseinrichtung 22 zentral bzw. aus der Ferne vom Stromnetz zu trennen. Hierdurch kann sichergestellt werden, dass Verbraucher, die an der Anschlusseinrichtung 22 angeschlossen sind, stromlos geschaltet werden können, bevor die Anschlusseinrichtung 22 von der Unterflureinrichtung 1 abgenommen wird. Ferner kann durch eine Rundsteueranlage 39 in vorteilhafterweise der individuelle Stromverbrauch bestimmt und ggf. abgerechnet werden.

Die Anschlusseinrichtung 22 kann alternativ oder zusätzlich zu Stromanschlüssen auch zur Versorgung mit Wasser, Gas, Druckluft, Telekommunikationsdiensten, Netzwerkdiensten und/oder eine Verbindung mit dem Internet ausgebildet sein. Hierzu können zumindest teilweise zusätzliche Konnektoren an der Anschlusseinrichtung 22 und der Unterflureinrichtung 1 derart korrespondierend zueinander vorgesehen sein, die in Fig. 12 nicht näher dargestellt sind, dass bei Aufsetzen der Anschlusseinrichtung 22 auf die Unterflureinrichtung die Anschlusseinrichtung 22 automatisch entsprechend mit Wasser, Gas, Druckluft, Telekommunikationsdiensten, Netzwerkdiensten und/oder eine Verbindung mit dem Internet versorgt wird. Die Anschlusseinrichtung 22 kann weitere Konnektoren 36 zur Abgabe von Wasser, Gas, Druckluft, Telekommunikationsdiensten, Netzwerkdiensten und/oder eine Verbindung mit dem Internet aufweisen.

Alternativ oder zusätzlich kann eine Anbindung der Anschlusseinrichtung 22 an Telekommunikationsdienste, Netzwerkdienste und/oder das Internet auch per Funkt realisiert sein. Hierbei ist es bevorzugt, dass die Anschlusseinrichtung 22 eine oder mehrere Antennen aufweist.

Gemäß einem Aspekt der vorliegenden Erfindung ist im Inneren der Anschlusseinrichtung 22 ein Adapter oder Schlüssel angeordnet, mit dem das oder die Verbindungsmittel 23 rotiert oder auf andere Weise gelöst werden können. Hierdurch kann sichergestellt werden, dass ein Lösen der Anschlusseinrichtung 22 lediglich durch Berechtigte erfolgen kann.

Die Anschlusseinrichtung 22 ist vorzugsweise als Landanschlussschrank oder Landanschlusskasten realisiert. Insbesondere handelt es sich also bei der Anschlusseinrichtung 22 um ein vorzugsweise verschließbares Gehäuse, das dazu eingerichtet ist, einen Zugang zu innenliegenden Konnektoren zu ermöglichen. Im Darstellungsbeispiel in Fig. 12 ist die Anschlusseinrichtung 22 als bevorzugt zweiflügliger Schrank ausgebildet. Eine Tür 34 kann eine Durchführung, insbesondere Klappe 35, aufweisen, um ein Herausführen von Stromkabeln zum Anschluss eines Verbrauchers, insbesondere Schiffs, zu ermöglichen, ohne dass ein Zugang zu Konnektoren oder eine Manipulation im Inneren der Anschlusseinrichtung 22 möglich ist. Die Anschlusseinrichtung 22 ist vorzugsweise zumindest spritzwassergeschützt ausgebildet (insbesondere gemäß Schutzklasse IP 44 nach DIN EN 605 29), insbesondere strahlwasserdicht (insbesondere gemäß Schutzart IP 65 nach DIN EN 605 29).

Die Anschlusseinrichtung 22 kann eine Zugangskontrolle oder sonstige Identifikationseinrichtung 37 aufweisen, insbesondere auf Basis eines Identifikationsmittels wie einer Kreditkarte, Scheckkarte, eines RFID-Transparders oder durch Erfassung biometrischer Informationen. Durch Authentifizierung eines Identifikationsmittels kann der Zugang zu der Anschlusseinrichtung 22, eine Öffnung der Tür 33 der Anschlusseinrichtung 22 ermöglicht und/oder mindestens ein Konnektor zur Versorgung mit elektrischer Energie, insbesondere eine Schutzkontaktsteckdose 32 und/oder ein Drehstromkonnektor 33 freigegeben werden.

Ferner kann die über diesen Konnektor abgegebene Energiemenge automatisch dem Identifikationsmittel oder einem hiermit assoziierten Konto zugeordnet werden. In besonders vorteilhafter Weise kann das Identifikationsmittel bzw. ein korrespondierendes Konto der Anschlusseinrichtung 22 dazu verwendet werden, in Kombination mit der Rundsteueranlage 39 oder einer alternativen Datenverbindung Identifikationsinformationen und Verbrauchsinformationen, bevorzugt über das Stromnetz, beispielsweise an einen Energieversorger zu. Dieser kann daraufhin die maximal abzugebende Energiemenge und/oder die Abrechnung der abgegebenen Energie kontrollieren bzw. durchführen. Alternativ oder zusätzlich können Abrechnungsdaten auch durch die Steuereinrichtung 38 der Anschlusseinrichtung verarbeitet und einem Konto oder Identifikationsmittel zugeordnet werden. Zudem ist eine Abrechnung über das Identifikationsmittel möglich, beispielsweise wenn es sich um eine Kreditkarte handelt.

**Bezugszeichenliste:**

| | | | |
|---|---|---|---|
| 1 | Unterflureinrichtung | 22 | Anschlusseinrichtung |
| 2 | Bodenniveau | 23 | Befestigungseinrichtung |
| 3 | Kante | 24 | Transporteinrichtung |
| 4 | Oberseite | 25 | Konnektor |
| 5 | Starkstromkonnektor | 26 | Dach |
| 6 | Deckelplatte | 27 | Verbindungsmittel |
| 7 | Führungsmittel | 28 | Führungsmittel |
| 8 | Deckel | 29 | Anschlag |
| 9 | Grundkörper | 30 | Anschlag |
| 10 | Hohlraum | 31 | Gegenlager |
| 11 | Verbindungsmittel | 32 | Schutzkontaktsteckdose |
| 12 | Befestigungsmittel | 33 | Drehstormkonnektor |
| 13 | Rahmen | 34 | Tür |
| 14 | Öffnung | 35 | Klappe |
| 15 | Gitter | 36 | Schnittstelle |
| 16 | Befestigungsmittel | 37 | Identifikationseinrichtung |
| 17 | Befestigungsmittel | 38 | Steuereinrichtung |
| 18 | Durchbruch | 39 | Rundsteueranlage |
| 19 | Abdeckung | | |
| 20 | Lüftungsloch | | |
| 21 | Befestigungsmittel | F | Flutungseinrichtung |

## Patentansprüche

1. Unterflureinrichtung (1) zum stationären Einbau unterhalb eines Bodenniveaus (2), vorzugsweise an einer Kante (3) eines Ufers oder Kais, zur Versorgung insbesondere von Schiffen mit elektrischer Energie, wobei die Unterflureinrichtung (1) eine in Einbaulage unter dem Bodenniveaus (2) liegende Oberseite aufweist, die mindestens einen Konnektor (5) aufweist und einen in Einbaulage unterhalb der Oberseite (4) angeordneten Hohlraum (10) der Unterflureinrichtung (1) begrenzt, wobei die Unterflureinrichtung eine in Einbaulage unterhalb der Oberseite (4) angeordnete Flutungseinrichtung (F) aufweist, die dazu ausgebildet ist, ein Fluten des Hohlraums (10) der Unterflureinrichtung (1) zu ermöglichen, sodass ein Aufschwimmen der Unterflureinrichtung (1) bei einem steigenden, auf die Unterflureinrichtung wirkenden Wasserspiegel verhindert wird.

2. Unterflureinrichtung gemäß Anspruch 1, **dadurch gekennzeichnet, dass** die Flutungseinrichtung (F) dazu ausgebildet ist, bei steigendem, auf die Unterflureinrichtung (1) wirkendem Wasserspiegel ein zumindest im Wesentlichen vollständiges Fluten des Hohlraums (10) und/oder bei sinkendem, auf die Unterflureinrichtung (1) wirkendem Wasserspiegel ein zumindest im Wesentlichen vollständiges Leerlaufen des Hohlraums (10) zu ermöglichen.

3. Unterflureinrichtung gemäß Anspruch 1 oder 2, **dadurch gekennzeichnet, dass** die Flutungseinrichtung (F) eine oder mehrere in Einbaulage seitlich an der Unterflureinrichtung (1) angeordnete Öffnungen (14) des Hohlraums (10) aufweist oder bildet, insbesondere wobei die Flutungseinrichtung (F) ein Gitter (15) aufweist.

4. Unterflureinrichtung gemäß einem der voranstehenden Ansprüche, **dadurch gekennzeichnet, dass** sich die Flutungseinrichtung (F) über mehr als 30 %, vorzugsweise mehr als 50 %, insbesondere mehr als 70 % der Fläche einer Seitenwand der Unterflureinrichtung (1) und/oder der vertikalen Erstreckung der Unterflureinrichtung (1) in der Einbaulage erstreckt, und/oder wobei die Flutungseinrichtung (F) eine Seite der Unterflureinrichtung (1), insbesondere Seitenwand in der Einbaulage, zu mehr als 30 %, vorzugsweise mehr als 50 %, insbesondere mehr als 70 % öffnet, um eine fluidische und/oder visuelle Verbindung zwischen der Umgebung und dem Hohlraum (10) zu ermöglichen.

5. Unterflureinrichtung gemäß einem der voranstehenden Ansprüche, **dadurch gekennzeichnet, dass** die Unterflureinrichtung (1) an der Oberseite (4) Verbindungsmittel (17) zum Fixieren einer Anschlusseinrichtung (22) und/oder Führungsmittel (28), insbesondere Führungshülsen oder Führungsbolzen, zum Führen einer Anschlusseinrichtung (22) aufweist, vorzugsweise wobei die Führungsmittel (28) eine Lage der Unterflureinrichtung (1) zu einer Anschlusseinrichtung (22) derart vorgeben, dass bei Aufsetzen der Anschlusseinrichtung (22) ein automatisches Verbinden eines Starkstromkonnektors (25) der Anschlusseinrichtung (22) mit dem Starkstromkonnektor (25) der Unterflureinrichtung (1) ermöglicht wird.

6. Vorrichtung zur Versorgung insbesondere von Schiffen mit elektrischer Energie, wobei die Vorrichtung eine Unterflureinrichtung (1) gemäß einem der voranstehenden Ansprüche und eine von der Unterflureinrichtung (1) abnehmbare Anschlusseinrichtung (22) aufweist, die in Einbaulage der Unterflureinrichtung (1) von oben an der Unterflureinrichtung (1) fixierbar ist und einen Konnektor (5, 25) aufweist, wobei die Konnektoren (5, 25) der Unterflureinrichtung (1) und der Anschlusseinrichtung (22) derart korrespondierend ausgebildet und zueinander angeordnet sind, dass durch Anordnung der Anschlusseinrichtung (22) an der Unterflureinrichtung (1) automatisch eine elektrische Verbindung zwischen dem Anschlussschrank (22) und der Unterflureinrichtung (1) hergestellt wird.

7. Vorrichtung gemäß Anspruch 6, **dadurch gekennzeichnet, dass** die Anschlusseinrichtung Befestigungseinrichtung (23) zum fixieren der Anschlusseinrichtung (22) an der Unterflureinrichtung (1) aufweist, die dazu ausgebildet sind, mindestens eine Transporteinrichtung (24) zum Transport der Anschlusseinrichtung (22) erst nach Lösen der Befestigungseinrichtung (23) von der Unterflureinrichtung (1) freizugeben oder zur Verfügung zu stellen.

8. Vorrichtung gemäß Anspruch 6 oder 7, **dadurch gekennzeichnet, dass** die Transporteinrichtung (24) derart ausgebildet ist, dass die Transporteinrichtung (24) bei an der Unterflureinrichtung (1) fixierter Anschlusseinrichtung (22) in der Anschlusseinrichtung (22) zumindest teilweise versenkt ist und dass die Transporteinrichtung (24) durch Lösen der Anschlusseinrichtung (22) von der Unterflureinrichtung (1) zugänglich wird.

9. Verwendung einer Vorrichtung gemäß einem der Ansprüche 6 bis 8 zum bereitstellen einer Stromversorgung, insbesondere für ein Schiff, wobei die Anschlusseinrichtung (22) an eine unter dem Bodenniveaus (2) verankerten Unterflureinrichtung (1) angesetzt wird, wodurch die Anschlusseinrichtung (22) automatisch mit elektrischer Energie versorgt wird, und vorzugsweise wobei die Anschlusseinrichtung (22) die elektrische Energie einem Verbraucher, insbesondere dem Schiff, zur Verfügung stellt.

10. Verfahren zum Sichern einer Vorrichtung zur Versorgung, insbesondere von Schiffen, mit elektrischer Energie gegen Hochwasser, wobei ein an einer stationären Unterflureinrichtung (1) reversibel fixierter Anschlussschrank (22) gelöst und von der Unterflureinrichtung (1) abgehoben wird, wodurch eine elektrische Verbindung automatisch getrennt wird, vorzugsweise wobei die Unterflureinrichtung (1) daraufhin geflutet wird.
